# FASCICULE DE BREVET EUROPEEN

(11) **EP 4 073 351 B1**
(45) Date de publication et mention de la délivrance du brevet: **20.11.2024**
(21) Numéro de dépôt: 20828038.8
(22) Date de dépôt: 03.12.2020
(51) Int. Cl.: F01D 1/26, F01D 5/30, F02C 3/067

(54) **ROUE DE ROTOR DE TURBINE POUR UNE TURBOMACHINE D'AERONEF**
TURBINENROTORRAD FÜR EINE FLUGZEUGTURBOMASCHINE
TURBINE ROTOR WHEEL FOR AN AIRCRAFT TURBOMACHINE

(30) Priorité: 10.12.2019 FR 1914015
(43) Date de publication de la demande: 19.10.2022
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BELMONTE, Olivier, 77550 MOISSY-CRAMAYEL (FR)
(74) Mandataire: Gevers & Orès
(86) Numéro de dépôt international: PCT/FR2020/052258
(87) Numéro de publication internationale: WO 2021/116567

(56) Documents cités:
- EP-A1- 2 863 016
- EP-A1- 3 020 926
- EP-A2- 2 728 121
- EP-B1- 2 728 121
- EP-B1- 3 020 926
- US-A1- 2011 110 786
- US-A1- 2012 099 999

## Description

### Domaine technique de l'invention

La présente invention concerne une roue de rotor de turbine, en particulier contrarotative, pour une turbomachine d'aéronef.

### Arrière-plan technique

De manière classique, une turbomachine d'aéronef comprend d'amont en aval, dans le sens d'écoulement des gaz, une soufflante, un compresseur basse pression, un compresseur haute pression, une chambre annulaire de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

D'un point de vue performance moteur et consommation, il est avantageux de maximiser la vitesse de rotation de la turbine basse pression car cela permet d'obtenir un meilleur rendement de la turbine. Cependant, augmenter la vitesse de rotation de la turbine implique d'augmenter les efforts centrifuges qu'elle subit, et complique donc fortement sa conception.

Une suggestion pour augmenter le rendement d'une turbine sans pour autant augmenter sa vitesse de rotation consiste à utiliser une turbine contrarotative. La turbine basse pression est alors remplacée par une turbine à deux rotors dont un premier rotor est configuré pour tourner dans un premier sens de rotation et est relié à un premier arbre de turbine, et un second rotor est configuré pour tourner dans un sens opposé de rotation et est relié à un second arbre de turbine. Le premier rotor comporte des roues de turbine intercalées entre des roues de turbine du second rotor.

Une turbine basse pression peut avoir une vitesse de rotation au décollage de l'ordre de 4.000 tours par minute dans une architecture classique où la turbine entraine directement la soufflante ou une vitesse de rotation au décollage de l'ordre de 10.000 tours par minute dans une architecture où la turbine entraine la soufflante par l'intermédiaire d'un réducteur. Son remplacement par une turbine contrarotative dont les rotors tournent respectivement à des vitesses au décollage de l'ordre de 3.000 et 7.000 tours par minute permet d'avoir une vitesse relative de 10.000 tours par minute (3000+7000) tout en ayant une vitesse absolue dans une tranche basse de l'intervalle de vitesse précité.

Cette turbine contrarotative comprend ainsi un rotor lent et un rotor rapide, le rotor lent entraînant la soufflante et le rotor rapide engrenant avec un réducteur mécanique à train épicycloïdal de type planétaire dont l'entrée et la sortie sont contrarotatives (couronne tournante, porte-satellites fixe, solaire tournant).

Le réducteur couple le rotor rapide et le rotor lent, permettant ainsi un transfert de puissance du rotor rapide vers le rotor lent. On profite des rendements supérieurs d'une turbine rapide tout en transférant une large part de la puissance de la turbine vers la soufflante sans transiter par un réducteur mais par un arbre.

Cette architecture est complexe de par son intégration mécanique. Une problématique est liée à la transmission de couple entre le rotor lent et la soufflante. Cette transmission de couple est en général réalisée par l'intermédiaire du dernier étage ou de la dernière roue du rotor lent (c'est-à-dire la plus aval) directement à une extrémité aval d'un arbre de turbine dont l'extrémité amont est reliée à la soufflante.

Une solution à cette problématique consiste à réaliser la roue de transmission de couple d'une seule pièce, cette roue étant alors fixée à l'extrémité aval de l'arbre de turbine. Bien que la transmission de couple soit ici assurée, cette solution n'est pas satisfaisante car la roue est soumise en fonctionnement à des températures de fonctionnement qui font apparaître des gradients thermiques importants dans la pièce, susceptibles de la déformer et de faire perdre son centrage par rapport à son axe de rotation.

Ces gradients thermiques sont également susceptibles de faire apparaitre des criques et fissures et rien n'est prévu pour assurer une retenue d'un morceau de cette pièce après rupture. Ce morceau peut donc s'échapper dans la veine de turbine et entraîner des dégâts importants dans le moteur. L'invention a notamment pour but d'apporter une solution simple, efficace et économique à au moins une partie des problèmes évoqués ci-dessus.

Il n'est pas envisageable pour de telles roues de turbine d'utiliser des conceptions classiques comme celles des documents EP-2.728.121-A2, US-2011/110786-A1 ou EP-2.863.016-A1 comportant des aubes retenues par des queues d'aronde ou par des pattes reçues dans des gorges formées dans l'épaisseur du disque, ces conceptions étant trop encombrantes axialement. Les conceptions à une aube de verrouillage unique comme celle du document US-2012/0099999-A1 ou à double chape externe comme celle du document EP-3.020.926-A1 ne sont pas non plus satisfaisantes.

### Résumé de l'invention

L'invention propose une roue de rotor de turbine, en particulier contrarotative, pour une turbomachine d'aéronef, comportant :
- un disque de rotor s'étendant autour d'un axe X,
- une virole annulaire s'étendant autour dudit X et dudit disque, et
- des aubes disposées entre ledit disque et ladite virole et comportant des pieds fixés audit disque, et des sommets fixés à ladite virole,
caractérisée en ce que le pied de chacune des aubes comprend deux pattes de fixation au disque, ces pattes étant disposées respectivement en amont et en aval d'une paroi du disque, par rapport audit axe, la patte disposée en amont étant engagée dans un premier renfoncement du disque et étant configurée pour coopérer par butée avec un bord périphérique de ce premier renfoncement, la patte disposée en aval étant engagée dans un second renfoncement du disque et étant configurée pour coopérer par butée avec un bord périphérique de ce second renfoncement, lesdits premier et second renfoncements étant situés de part et d'autre de ladite paroi.

Les pattes de fixation de chaque aube forment donc des parties mâles (ou femelles) engagées dans des parties femelles (ou mâles) formées par les renfoncements du disque. Cet engagement mâle-femelle de chaque pied d'aube assure une transmission de couple optimale. Les pattes peuvent en effet coopérer par butée avec les bords périphériques des renfoncements, ce qui permet d'avoir une multitude de surfaces d'appui et de transmission de couple. Par ailleurs, la configuration de la roue en plusieurs pièces (plutôt qu'une seule pièce monobloc) est avantageuse car cela limite l'apparition de gradients thermiques importants dans une seule et même pièce et donc le risque de déformation et de crique de cette pièce. L'assemblage et la fabrication de la roue sont relativement aisés. Enfin, le risque de décentrage du disque est réduit et l'engagement mâle-femelle peut en outre permettre de limiter le risque de rupture et perte d'une aube dans la veine de turbine.

La roue de rotor selon l'invention peut comprendre une ou plusieurs des caractéristiques ci-dessous, prises isolément les unes des autres ou en combinaison les unes avec les autres :
- lesdites pattes sont sensiblement planes et parallèles et s'étendent dans des plans sensiblement perpendiculaires audit axe X,
- ladite paroi comprend un orifice orienté parallèlement audit axe X et aligné avec des orifices desdites pattes, un élément de fixation traversant les orifices des pattes et de la paroi ; cet élément de fixation peut assurer la rétention de l'aube par rapport au disque ;
- au moins certains des orifices des pattes et de la paroi ont une forme allongée ou oblongue et comportent une plus longue dimension orientée en direction radiale par rapport audit axe X ; cette forme peut permettre d'assurer la liberté de dilatation des pièces en fonctionnement ;
- chacune des pattes comprend une première paire de butées circonférentielles et une seconde paire de butées circonférentielles, les première et seconde paires étant à distance radiale l'une de l'autre, et chacune des butées de chaque paire étant apte à prendre appui sur le bord périphérique du renfoncement correspondant ;
   -- les butées de la première paire sont à une distance l'une de l'autre qui est différente de celle entre les butées de la seconde paire ;
- les premier et second renfoncements comportent chacun une première partie radialement externe ayant une largeur ou dimension circonférentielle D1 et une partie radialement interne ayant une largeur ou dimension circonférentielle D2, avec D2 < D1 ;
- les aubes comportent des pales reliées auxdits pieds par des plateformes, ces plateformes étant disposés circonférentiellement les unes à côté des autres autour dudit disque ;
- un bouclier thermique de forme annulaire est rapporté et fixé sur une face amont ou aval dudit disque ;
- ladite virole est sectorisée et comporte des secteurs de virole reliés chacun à un sommet d'une des aubes, les secteurs de virole comportant des secteurs d'une bride annulaire de fixation à une autre roue de rotor ;

-- le bouclier comprend une partie radialement externe de forme générale cylindrique ou tronconique et entourée par les plateformes des aubes ;
-- le bouclier comprend une partie intermédiaire ayant en section une forme générale en C définissant un espace annulaire dans lequel son logées des extrémités axiales desdits éléments de fixation;
-- le bouclier comprend une partie radialement interne s'étendant sensiblement perpendiculairement audit axe X et appliquée et fixée contre ledit disque.

La présente invention concerne également une turbomachine à turbine contrarotative pour un aéronef, la turbomachine comportant une turbine contrarotative dont un premier rotor est configuré pour tourner dans un premier sens de rotation et est relié à un premier arbre de turbine, et un second rotor est configuré pour tourner dans un sens opposé de rotation et est relié à un second arbre de turbine, le premier rotor comportant des roues de turbine intercalées entre des roues de turbine du second rotor, caractérisée en ce que l'une des roues du second rotor est telle que définie ci-dessus et est relié au second arbre de turbine par son disque.

Ainsi, cette roue peut assurer la reprise de couple et la tenue radiale du second rotor de turbine.

De manière optionnelle mais avantageuse, les roues de turbine du premier rotor sont reliées entre elles et au premier arbre intérieurement à la veine, et les roues de turbine du second rotor sont reliées extérieurement à la veine et au second arbre par le disque de la roue selon l'invention.

Préférentiellement la turbomachine est du type à une unique soufflante carénée, le premier arbre entraînant en rotation cette unique soufflante.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue très schématique en coupe axiale d'une turbomachine d'aéronef à turbine contrarotative,
[Fig.2] la figure 2 est une vue très schématique d'une turbine contrarotative d'une turbomachine d'aéronef,
[Fig.3] la figure 3 est une vue schématique en perspective d'une partie d'une roue de rotor selon un mode de réalisation de l'invention,
[Fig.4] la figure 4 est une vue à plus grande échelle d'une partie de la figure 3,
[Fig.5] la figure 5 est une vue schématique en coupe axiale de la roue de rotor de la figure 3,
[Fig.6] La figure 6 est une vue schématique en perspective d'une extrémité radialement interne d'une aube de la roue de rotor de la figure 3,
[Fig.7] La figure 7 est une vue schématique partielle en perspective d'un disque de la roue de rotor de la figure 3,
[Fig.8] La figure 8 est une vue de détail du disque de la figure 7,
[Fig.9] La figure 9 est une vue similaire à celle de la figure 8 et montrant une extrémité radialement interne d'une aube fixée sur le disque, et
[Fig.10] La figure 10 est une vue schématique de face du disque et des extrémités radialement internes de la roue de rotor de la figure 3.

### Description détaillée de l'invention

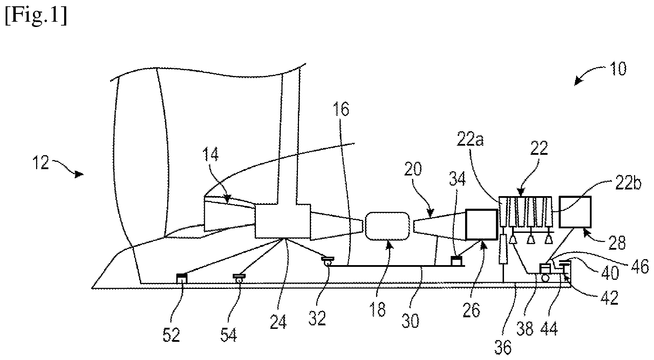

La figure 1 représente de manière très schématique une turbomachine 10 à turbine contrarotative pour un aéronef.

Cette turbomachine 10 comprend d'amont en aval, dans le sens d'écoulement des gaz, une soufflante 12, un compresseur basse pression 14, un compresseur haute pression 16, une chambre annulaire de combustion 18, une turbine haute pression 20 et une turbine contrarotative 22.

La référence 24 désigne un carter intermédiaire situé entre les compresseurs 14 et 16, et la référence 26 désigne un carter de turbine (du type TVF, acronyme de l'anglais Turbine Vane Frame qui désigne un carter de turbine équipé de bras formant des aubages de redresseur) situé entre les turbines 20 et 22. Enfin, la référence 28 désigne un carter d'échappement (du type TRF, acronyme de l'anglais Turbine Rear Frame qui désigne le dernier carter de turbine). Ces carters forment la structure de la turbomachine : ils supportent les paliers qui guident les arbres en rotation et sont liés aux suspensions de la turbomachine.

Le rotor de la turbine haute pression 20 entraîne en rotation le rotor du compresseur haute pression 16 par un arbre haute pression 30 qui est centré et guidé en rotation par des paliers, tels qu'un palier amont 32 à billes et un palier aval 34 à rouleaux. Le palier 32 est monté entre une extrémité amont de l'arbre 30 et le carter intermédiaire 24, et le palier 34 est monté entre une extrémité aval de l'arbre 30 et le carter de turbine 26.

La turbine contrarotative 22 comprend un premier rotor 22a dont des roues 22aa sont configurées pour tourner dans un premier sens de rotation et sont reliées à un premier arbre de turbine 36, et un second rotor 22b dont des roues 22ba sont configurées pour tourner dans un sens opposé de rotation et sont reliées à un second arbre de turbine 38 et sont intercalées entre les roues 22aa du rotor 22a.

Chaque roue de turbine comprend une rangée annulaire d'aubes qui comportent chacune un profil aérodynamique comportant un intrados et un extrados qui se rejoignent pour former un bord d'attaque et un bord de fuite des gaz dans la veine de turbine.

Le premier arbre 36 entraine en rotation la soufflante 12 ainsi que le rotor du compresseur basse pression 14. Ce premier arbre 36 est en outre engrené avec une couronne 40 d'un réducteur mécanique 42 à train épicycloïdal de type planétaire.

Le second arbre 38 est engrené avec le solaire 44 ou planétaire du réducteur 42.

Le réducteur 42 comprend en outre des satellites engrenés respectivement avec le solaire 44 et la couronne 40 et portés par un porte-satellites 46 qui est fixé au carter d'échappement 28.

Chacun des carters 26 et 28 comprend en général un moyeu central, ainsi qu'un anneau extérieur qui entoure le moyeu et qui est relié à celui-ci par une série de bras sensiblement radiaux par rapport à l'axe longitudinal de la turbomachine. Le moyeu central du carter 28 s'étend autour d'au moins une partie du réducteur 42.

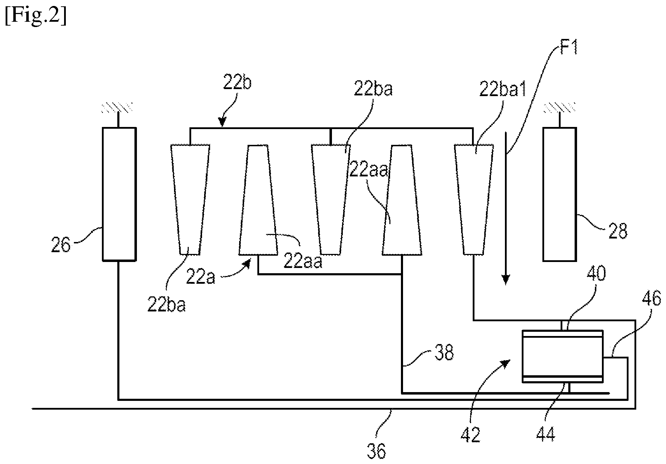

La figure 2 montre à plus grande échelle l'extrémité aval d'une turbomachine et en particulier sa turbine contrarotative 22. Les éléments de cette figure 2, déjà décrits dans ce qui précède, sont désignés par les mêmes références. Dans ce mode de réalisation, le porte-satellites 46 est fixé au carter de turbine 26.

On voit à la figure 2 que le rotor 22a, appelé rotor rapide, est relié à l'arbre 38 qui est engrené avec le solaire 44 ou planétaire du réducteur 42. Le rotor 22b, appelé rotor lent, est relié à l'arbre 36 qui engrène avec la couronne 40 du réducteur 42 et entraîne la soufflante.

La liaison du rotor 22b à l'arbre 36 se fait par le dernier étage ou la dernière roue du rotor qui doit être avantageusement conçue pour transmettre le couple de rotation (flèche F1 ) à l'arbre 36 tout en limitant les contraintes liées aux gradients thermiques en fonctionnement et assurer la tenue radiale du second rotor de turbine.

Les roues 22aa de turbine du premier rotor 22a sont reliées entre elles et au premier arbre 38 intérieurement à la veine. Les roues 22ba de turbine du second rotor 22b sont reliées extérieurement à la veine et au second arbre 36 par le disque de la roue 22ba1 selon l'invention.

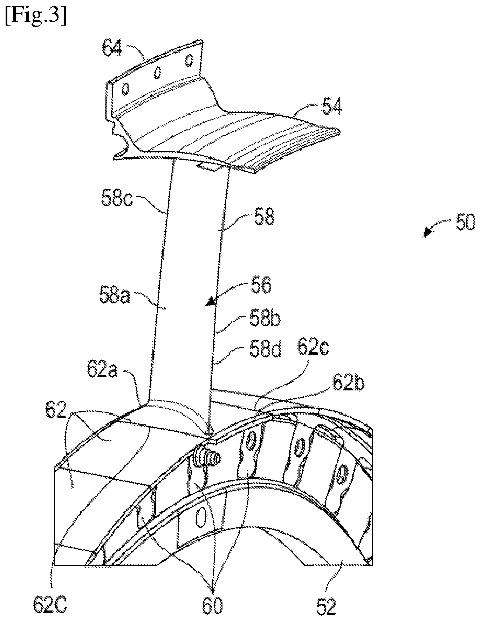

L'invention propose une solution à ce problème et un mode de réalisation de cette invention est représenté aux figures 3 et suivantes.

La solution est une roue de rotor 50 configurée pour autoriser la transmission du couple (F1) tout en ayant une durée de vie optimale.

La roue de rotor 50 comprend pour l'essentiel trois parties, à savoir
- un disque de rotor 52 s'étendant autour d'un axe X, qui est l'axe longitudinal de la turbomachine,
- une virole annulaire 54 s'étendant autour de l'axe X et du disque 52, et
- des aubes 56 disposées entre le disque 52 et la virole 54.

Les aubes 56 s'étendent sensiblement radialement entre le disque 52 et la virole 54 et comprennent chacune une pale 58 à profil aérodynamique qui comporte un intrados 58a et un extrados 58b reliés par un bord d'attaque 58c et par un bord de fuite 58d.

L'extrémité radialement externe de la pale 58 ou de l'aube 56 est appelée sommet et est ici reliée rigidement à la virole 54. Cette virole 54 est sectorisée et comprend donc plusieurs secteurs disposés circonférentiellement les uns à côté des autres autour de l'axe X.

L'extrémité radialement interne de l'aube 56 comprend un pied 60 qui est relié à la pale 58 par une plateforme 62. La plateforme 62 d'une aube 56 est destinée à être située au-dessus ou à l'extérieur du disque 52 et à être agencée entre deux plateformes 62 d'aubes adjacentes, comme cela est visible à la figure 3.

Le pied 60, la plateforme 62, la pale 58 voire également le secteur de virole 54 peuvent être formés d'une seule pièce. Pour plus de clarté, dans la figure 3, seule une des aubes 58 est entièrement représentée. Les autres aubes de la roue sont partiellement représentées car seules leurs plateformes 62 et pieds 60 sont visibles.

Comme c'est le cas des secteurs de virole 54, les plateformes 62 des aubes 56 sont disposées circonférentiellement les unes à côté des autres autour du disque 52 et de l'axe X.

Chaque plateforme 62 comprend un bord amont 62a, un bord aval 62b et deux bords latéraux 62c s'étendant entre les bords 62a, 62b. Les bords 62c de chaque plateforme 62 sont situés à faible distance des bords 62c en regard des plateformes adjacentes.

C'est également le cas des secteurs de virole 54. Chaque secteur de virole 54 comprend un bord amont 54a, un bord aval 54b et deux bords latéraux 54c s'étendant entre les bords 54a, 54b. Les bords 54c de chaque plateforme 54 sont situés à faible distance des bords 54c en regard des secteurs de virole adjacents. Par ailleurs, le bord 54a de chaque secteur comprend un secteur de bride de fixation 64, les secteurs de bride 64 de tous les secteurs de virole 54 formant une bride annulaire de fixation, en particulier à une virole adjacente (non représentée) solidaire d'une autre roue du rotor 22b de turbine. Cette bride ou chaque secteur de bride 64 comprend des orifices axiaux de passage d'éléments de fixation du type vis-écrou par exemple.

Le pied 60 de chaque aube 56 comprend deux pattes 66 d'engagement dans des renfoncements 68 du disque 52 et de fixation sur ce disque.

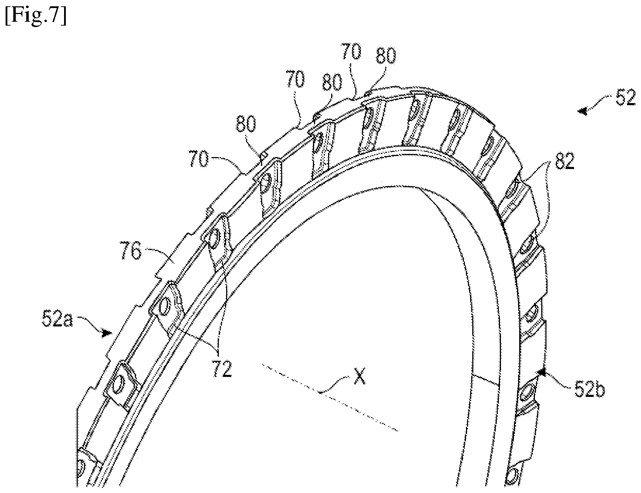

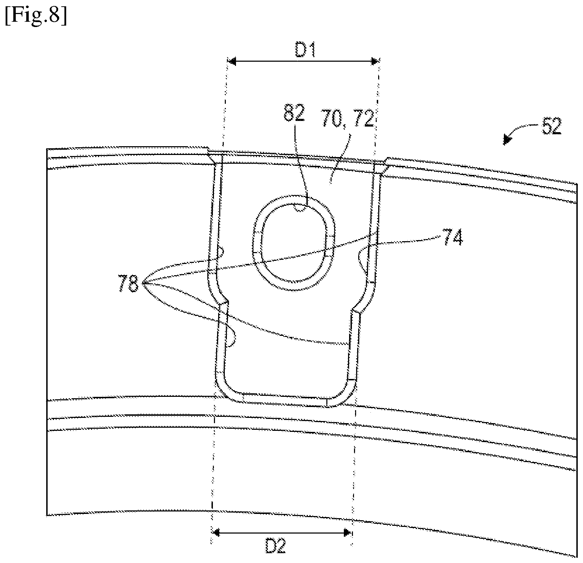

Le disque 52 est représenté seul aux figures 7 et 8. Il a une forme générale annulaire, c'est-à-dire que son centre est évidé. Les moyens de liaison de ce disque 52 à l'arbre 36, pour la transmission du couple (F1), ne sont pas représentés.

Les pieds 60 des aubes 56 sont fixés à la périphérie externe du disque 52 qui comprend une face amont 52a et une face aval 52b. Des premiers renfoncements 70 sont présents sur la face amont 52a et son régulièrement répartis autour de l'axe X. Des seconds renfoncements 72 sont présents sur la face amont 52b et sont régulièrement répartis autour de l'axe X.

Le nombre de renfoncements 70 est identique au nombre de renfoncements 72, et chacun des renfoncements 72 est situé en alignement axial d'un des renfoncements 70.

Dans l'exemple représenté, les formes des renfoncements sont identiques. En variante, il pourrait toutefois être différent pour former un indexage et empêcher un mauvais montage des aubes (orientation du bord d'attaque vers l'aval plutôt que vers l'amont).

Un renfoncement 70, 72 est mieux visible à la figure 8 et comprend une forme générale en T. Chaque renfoncement comporte une première partie radialement externe (par rapport à l'axe X) ayant une largeur ou dimension circonférentielle D1 et une partie radialement interne ayant une largeur ou dimension circonférentielle D2. D2 < D1.

Chaque renfoncement 70, 72 comprend un bord périphérique 74 qui n'est pas continu dans l'exemple représenté car chaque renfoncement débouche radialement vers l'extérieur sur un bord périphérique externe 76 du disque. Chacune des parties d'un renfoncement 70, 72 comprend des surfaces latérales 78 en regard d'appui en direction circonférentielle.

Le fond d'un renfoncement 70, 72 est formé par une paroi 80 du disque et la figure 7 permet de voir que les renfoncements sons situés de part et d'autre de ces parois 80.

Les parois 80 comprennent chacune un orifice axial 82. Cet orifice 82 a de préférence une forme oblongue ou allongée dont l'axe d'allongement est orienté radialement par rapport à l'axe. Cela signifie que chaque orifice 82 a sa plus longue dimension qui est orientée radialement.

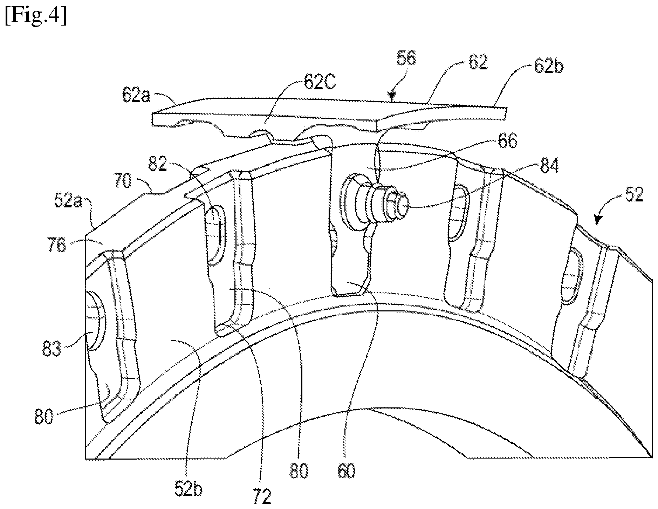

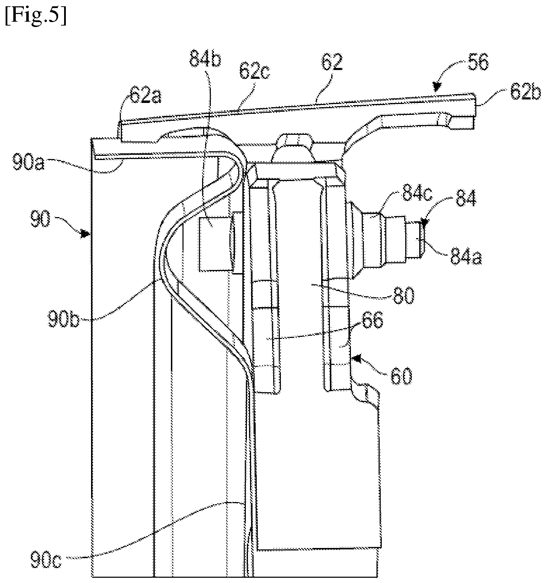

Comme on le voit aux figures 4, 5 et 6, un élément de fixation 84 tel qu'un boulon traverse cet orifice 82 ainsi que des orifices 85 des pattes 66 de l'aube 56. Chaque orifice 85 a de préférence une forme oblongue similaire à celle de l'orifice 82. La tige 84a du boulon s'étend à travers les orifices 82, 85 et comprend une extrémité qui est reliée à une tête 84b qui prend appui sur une des pattes 66 de l'aube, et une extrémité opposée qui reçoit un écrou 84c qui prend appui sur l'autre des pattes 66 de cette aube (cf. figure 5).

Les éléments de fixation 84 passent à travers les orifices 82, 85 oblongs des pattes 66 et des parois 80 qui autorisent des dilatations thermiques différentielles entre les pièces en fonctionnement, en particulier en direction radiale.

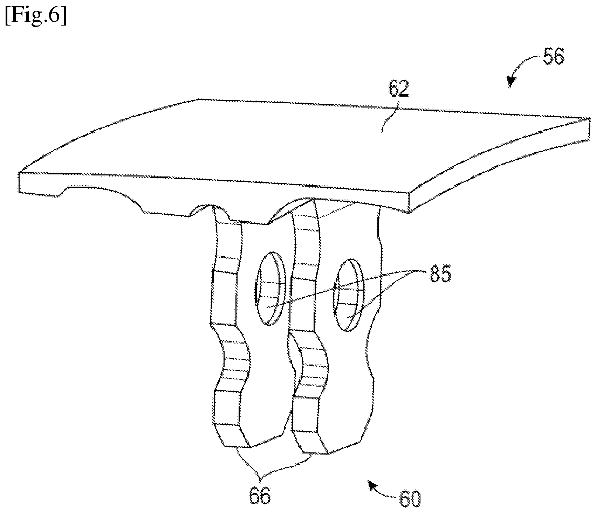

Le pied 60 d'une aube 56, et en particulier son extrémité radialement interne, est visible seul à la figure 6.

Les pattes 66 sont sensiblement planes et parallèles, et s'étendent dans des plans sensiblement perpendiculaires à l'axe X. Elles sont écartées l'une de l'autre d'une distance qui correspond à l'épaisseur de la paroi 80 qui est destinée à être insérée entre les pattes 66.

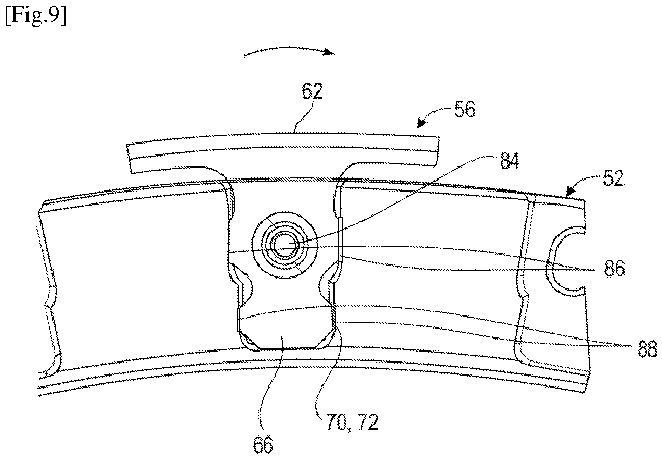

Chaque patte 66 est conçue pour être engagée par coopération mâle-femelle dans un renfoncement 70, 72 et comprend donc une forme quasi-complémentaire de celle du renfoncement (cf. figure 9).

Chaque patte 66 comprend une forme générale en 8 et comprend deux parties, respectivement externe 66a et interne 66b. La partie externe 66a est destinée à être engagée dans la partie externe d'un renfoncement 70 et comprend l'orifice 85 de cette patte. Cette partie 66a comprend une première paire de butées circonférentielles 86.

La partie interne 66b est destinée à être engagée dans la partie interne d'un renfoncement 70 et ne comprend pas d'orifice. Cette partie 66b comprend une seconde paire de butées circonférentielles 88.

Les première et seconde paires de butées 86, 88 sont à distance radiale l'une de l'autre. Les butées 86 sont aptes à coopérer par appui en direction circonférentielles avec les surfaces 78 du renfoncement 70, 72, et les butées 88 sont aptes à coopérer par appui en direction circonférentielles avec les surfaces 78 de ce renfoncement.

Les butées 86 sont à une distance l'une de l'autre qui est différente, et en particulier supérieure dans l'exemple représenté, de celle entre les butées 88.

Un bouclier thermique 90 de forme annulaire est rapporté et fixé sur la face amont 52a du disque 52 dans l'exemple représenté à la figure 5. Ce bouclier 90 recouvre cette face 52a afin de la protéger, par exemple des rayonnements thermiques provenant de la veine de turbine.

Dans l'exemple représenté, le bouclier 90 est formé d'une seule pièce et comprend trois parties, respectivement radialement externe 90a, intermédiaire 90b et radialement interne 90c.

La partie 90a a une forme générale cylindrique ou tronconique et est entourée par les plateformes 62 des aubes 56. La partie intermédiaire 90b a en section une forme générale en C définissant un espace annulaire 92 dans lequel sont logées des extrémités axiales des boulons telles que leurs têtes ou écrous. Enfin, la partie 90c s'étend sensiblement perpendiculairement à l'axe X et est appliquée et fixée contre le disque 52.

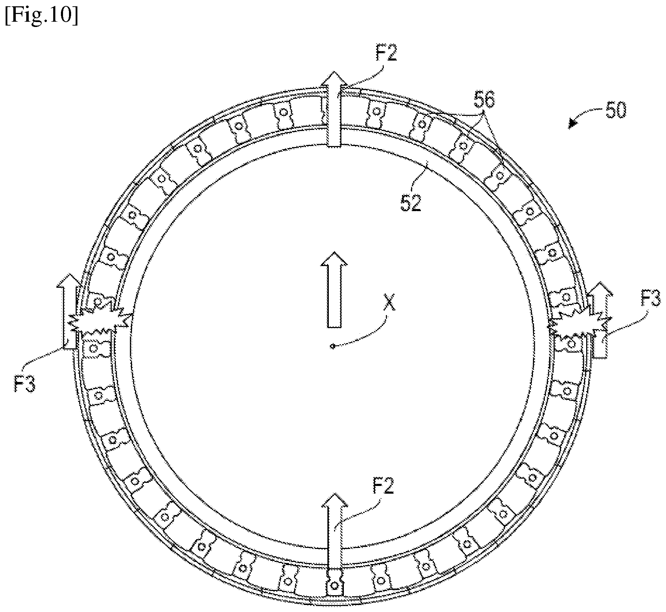

La figure 10 représente la roue compète sans représentation toutefois des viroles 54 et des aubes 56 dans leur totalité.

La roue peut être montée de la façon suivante. Le pied de chaque aube est monté à cheval à la périphérie du disque, sur une des parois 80. Pour cela, chaque aube est positionnée radialement à l'extérieur du disque de façon à ce que ses pattes 66 soient situées dans des plans perpendiculaires à l'axe X et donc parallèles à la paroi 80, et que cette dernière soit alignée avec l'espace inter-pattes. L'aube est alors déplacée radialement de l'extérieur vers l'intérieur de façon à ce que les pattes s'engagent par complémentarité de formes dans les renfoncements 70, 72 du disque. Les pattes sont ainsi engagées dans les renfoncements en commençant par les extrémités radialement internes ouvertes de ces renfoncements.

Lorsque toutes les aubes sont ainsi montées, leurs plateformes 62 ainsi que leur secteurs de virole 54 sont calées les unes par rapport aux autres en direction circonférentielle. Les aubes 56 se positionnent automatiquement en coopérant avec les aubes adjacentes. Cet ajustement permet une bonne tenue de l'ensemble aux forces centrifuges. La figure 10 montre par exemple que les efforts centrifuges F2 qui s'appliquent sur deux aubes 56' diamétralement opposées du disque sont au moins en partie reprises par appui circonférentiel (flèches F3) des butées 86, 88 des pieds d'aubes sur les surfaces en regard de leurs renfoncements respectifs. Par ailleurs, la répartition circonférentielle des butées permet d'assurer le centrage car un déplacement vertical comme illustré à la figure 10 va être bloqué par l'appui (F3), ce qui assure le maintien du centrage. En particulier, chaque patte a une de ses butées 86 qui coopère par appui avec une des surfaces 78 du renfoncement 70, 72, et une de ses butées 88 située du côté opposé à cette patte, qui coopère par appui avec une des surfaces 78 correspondante de ce renfoncement 70, 72. C'est en particulier le cas pour les deux aubes 56" diamétralement opposées situés à 90° des aubes 56', comme visible dans le dessin.

Comme évoqué dans ce qui précède, la roue de rotor selon l'invention permet notamment la reprise du couple de rotation (F1), la liberté de dilatation en radial afin de ne pas surcontraindre la roue, ainsi que le centrage de la roue.

## Revendications

1. Roue de rotor (50) de turbine, en particulier contrarotative, pour une turbomachine d'aéronef, comportant :
- un disque de rotor (52) s'étendant autour d'un axe X,
- une virole annulaire (54) s'étendant autour dudit axe X et dudit disque, et
- des aubes (56) disposées entre ledit disque et ladite virole et comportant des pieds (60) fixés audit disque, et des sommets fixés à ladite virole,
**caractérisée en ce que** le pied de chacune des aubes comprend deux pattes (66) de fixation sur le disque, ces pattes étant disposées respectivement en amont et en aval d'une paroi (80) du disque, par rapport audit axe, la patte disposée en amont étant engagée dans un premier renfoncement (70) d'une face amont (52a) du disque et étant configurée pour coopérer par butée avec un bord périphérique (74) de ce premier renfoncement, la patte disposée en aval étant engagée dans un second renfoncement (72) d'une face aval (52b) du disque et étant configurée pour coopérer par butée avec un bord périphérique (74) de ce second renfoncement, lesdits premier et second renfoncements étant situés de part et d'autre de ladite paroi, ladite paroi (80) comprenant un orifice (82) orienté parallèlement audit axe X et aligné avec des orifices (85) desdites pattes (66), un élément de fixation (84) traversant les orifices des pattes et de la paroi et au moins certains des orifices (82, 85) des pattes (66) et de la paroi (80) ont une forme allongée ou oblongue et comportent une plus longue dimension orientée en direction radiale par rapport audit axe X.

2. Roue de rotor (50) selon la revendication 1, dans laquelle lesdites pattes (66) sont sensiblement planes et parallèles, et s'étendent dans des plans sensiblement perpendiculaires audit axe X.

3. Roue de rotor (50) selon l'une des revendications précédentes, dans laquelle chacune des pattes (66) comprend une première paire de butées circonférentielles (86) et une seconde paire de butées circonférentielles 88), les première et seconde paires étant à distance radiale l'une de l'autre, et chacune des butées de chaque paire étant apte à prendre appui sur le bord périphérique (74) du renfoncement (70, 72) correspondant.

4. Roue de rotor (50) selon l'une des revendications précédentes, dans laquelle les premier et second renfoncements (70, 72) comportent chacun une première partie radialement externe ayant une largeur ou dimension circonférentielle D1 et une partie radialement interne ayant une largeur ou dimension circonférentielle D2, avec D2 < D1.

5. Roue de rotor (50) selon l'une des revendications précédentes, dans laquelle les aubes (56) comportent des pales (58) reliées auxdits pieds (60) par des plateformes (62), ces plateformes étant disposés circonférentiellement les unes à côté des autres autour dudit disque (56).

6. Roue de rotor (50) selon l'une des revendications précédentes, dans laquelle un bouclier thermique (90) de forme annulaire est rapporté et fixé sur une face amont (52a) ou aval (52b) dudit disque (52).

7. Roue de rotor (50) selon l'une des revendications précédentes, dans laquelle ladite virole (54) est sectorisée et comporte des secteurs de virole reliés chacun à un sommet d'une des aubes (56), les secteurs de virole comportant des secteurs d'une bride annulaire (64) de fixation à une autre roue de rotor.

8. Turbomachine (10) à turbine contrarotative pour un aéronef, la turbomachine comportant une turbine contrarotative (22) dont un premier rotor (22a) est configuré pour tourner dans un premier sens de rotation et est relié à un premier arbre de turbine (36), et un second rotor (22b) est configuré pour tourner dans un sens opposé de rotation et est relié à un second arbre de turbine (38), le premier rotor comportant des roues de turbine intercalées entre des roues de turbine du second rotor, **caractérisée en ce que** l'une des roues du second rotor est telle que définie à l'une des revendications précédentes et est relié au second arbre de turbine par son disque.

## Patentansprüche

1. Rotorrad (50) einer Turbine, insbesondere gegenläufig rotierend, für ein Turbotriebwerk eines Luftfahrzeugs, umfassend:
- eine Rotorscheibe (52), die sich um eine Achse X herum erstreckt,
- eine ringförmige Hülse (54), die sich um die Achse X und die Scheibe herum erstreckt, und
- Schaufeln (56), die zwischen der Scheibe und der Hülse angeordnet sind, und Füße (60), die an der Scheibe fixiert sind, und Scheitel umfassend, die an der Hülse fixiert sind,
**dadurch gekennzeichnet, dass** der Fuß von jeder der Schaufeln zwei Laschen (66) zur Fixierung auf der Scheibe umfasst, wobei diese Laschen bezüglich der Achse jeweils einer Wand (80) der Scheibe vorgelagert und nachgelagert angeordnet sind, wobei die vorgelagert angeordnete Lasche in einer ersten Aussparung (70) einer vorgelagerten Fläche (52a) der Scheibe in Eingriff vorliegt und konfiguriert ist, um durch Anlage mit einem Umfangsrand (74) dieser ersten Aussparung zu kooperieren, wobei die nachgelagert angeordnete Lasche in einer zweiten Aussparung (72) einer nachgelagerten Fläche (52b) der Scheibe in Eingriff vorliegt und konfiguriert ist, um durch Anlage mit einem Umfangsrand (74) dieser zweiten Aussparung zu kooperieren, wobei sich die ersten und zweiten Aussparungen beiderseits der Wand befinden, wobei die Wand (80) eine Öffnung (82), die parallel zu der Achse X orientiert und mit den Öffnungen (85) der Laschen (66) ausgerichtet ist, ein Fixierungselement (84), das die Öffnungen der Laschen und der Wand durchquert, umfasst, und mindestens gewisse der Öffnungen (82, 85) der Laschen (66) und der Wand (80) eine verlängerte oder längliche Form aufweisen und eine längere Abmessung umfassen, die bezüglich der Achse X in radialer Richtung orientiert ist.

2. Rotorrad (50) nach Anspruch 1, wobei die Laschen (66) im Wesentlichen eben und parallel sind und sich in den Ebenen im Wesentlichen senkrecht zur Achse X erstrecken.

3. Rotorrad (50) nach einem der vorstehenden Ansprüche, wobei jede der Laschen (66) ein erstes Paar von umlaufenden Widerlagern (86) und ein zweites Paar von umlaufenden Widerlagern (88) umfasst, wobei das erste und zweite Paar in radialem Abstand voneinander vorliegen und jedes der Widerlager von jedem Paar fähig ist, sich auf dem Umfangsrand (74) der entsprechenden Aussparung (70, 72) abzustützen.

4. Rotorrad (50) nach einem der vorstehenden Ansprüche, wobei die ersten und zweiten Aussparungen (70, 72) jeweils einen ersten radial externen Teil mit einer Breite oder umlaufender Abmessung D1, und einen radial internen Teil mit einer Breite oder umlaufender Abmessung D2 umfassen, mit D2 < D1.

5. Rotorrad (50) nach einem der vorstehenden Ansprüche, wobei die Schaufeln (56) Blätter (58) umfassen, die mit den Füßen (60) durch Plattformen (62) verbunden sind, wobei diese Plattformen eine neben der anderen umlaufend um die Scheibe (56) herum angeordnet sind.

6. Rotorrad (50) nach einem der vorstehenden Ansprüche, wobei eine Wärmeabschirmung (90) von ringförmiger Form auf einer vorgelagerten (52a) oder nachgelagerten (52b) Fläche der Scheibe (52) angebracht und fixiert ist.

7. Rotorrad (50) nach einem der vorstehenden Ansprüche, wobei die Hülse (54) sektorisiert ist und Hülsensektoren umfasst, die jeweils mit einem Scheitel einer der Schaufeln (56) verbunden sind, wobei die Hülsensektoren Sektoren eines ringförmigen Flansches (64) zur Fixierung an einem anderen Rotorrad umfassen.

8. Turbotriebwerk (10) mit gegenläufig rotierender Turbine für ein Luftfahrzeug, wobei das Turbotriebwerk eine gegenläufig rotierende Turbine (22) umfasst, von der ein erster Rotor (22a) konfiguriert ist, um in einer ersten Rotationsrichtung zu drehen und mit einer ersten Turbinenwelle (36) verbunden ist, und ein zweiter Rotor (22b) konfiguriert ist, um in der entgegengesetzten Rotationsrichtung zu drehen und mit einer zweiten Turbinenwelle (38) verbunden ist, wobei der erste Rotor zwischen den Turbinenrädern des zweiten Rotors eingefügte Turbinenräder umfasst, **dadurch gekennzeichnet, dass** eines der Räder des zweiten Rotors wie in einem der vorstehenden Ansprüche definiert ist und mit der zweiten Turbinenwelle durch seine Scheibe verbunden ist.

## Claims

1. A turbine rotor wheel (50), in particular a counter-rotating one, for an aircraft turbomachine, comprising:
- a rotor disc (52) extending about an axis X,
- an annular shroud (54) extending about said axis X and said disc, and
- vanes (56) arranged between said disc and said shroud and comprising roots (60) attached to said disc, and summits attached to said shroud,
**characterised in that** the root of each of the vanes comprises two tabs (66) for attachment to the disc, these tabs being arranged respectively upstream and downstream of a wall (80) of the disc, with respect to said axis, the tab arranged upstream being engaged in a first recess (70) of an upstream face (52a) of the disc and being configured to cooperate by abutment with a peripheral edge (74) of this first recess, the tab arranged downstream being engaged in a second recess (72) of a downstream face (52b) of the disc and being configured to cooperate by abutment with a peripheral edge (74) of this second recess, said first and second recesses being located on either side of said wall, said wall (80) comprising an orifice (82) oriented parallel to said axis X and aligned with orifices (85) of said tabs (66), an attachment element (84) passing through the orifices of the tabs and of the wall, and at least some of the orifices (82, 85) of the tabs (66) and of the wall (80) have an elongated or oblong shape and comprise a longer dimension oriented in the radial direction with respect to said axis X.

2. The rotor wheel (50) of claim 1, wherein said tabs (66) are substantially planar and parallel, and extend in planes substantially perpendicular to said axis X.

3. The rotor wheel (50) according to any of the preceding claims, wherein each of the tabs (66) comprises a first pair of circumferential stops (86) and a second pair of circumferential stops (88), the first and second pairs being radially spaced from each other, and each of the stops of each pair being adapted to bear on the peripheral edge (74) of the corresponding recess (70, 72).

4. The rotor wheel (50) of any of the preceding claims, wherein the first and second recesses (70, 72) each comprise a first radially external portion having a circumferential width or dimension D1 and a radially internal portion having a circumferential width or dimension D2, with D2 < D1.

5. The rotor wheel (50) according to any one of the preceding claims, wherein the vanes (56) comprise blades (58) connected to said roots (60) by platforms (62), these platforms being arranged circumferentially next to each other around said disc (56).

6. The rotor wheel (50) according to one of the preceding claims, wherein a thermal shield (90) of annular shape is fitted and attached to an upstream (52a) or downstream (52b) face of said disc (52).

7. The rotor wheel (50) according to any of the preceding claims, wherein said shroud (54) is sectorized and comprises shroud sectors each connected to a summit of one of the vanes (56), the shroud sectors comprising sectors of an annular flange (64) for attachment to another rotor wheel.

8. A turbomachine (10) with counter-rotating turbine for an aircraft, the turbomachine comprising a counter-rotating turbine (22) having a first rotor (22a) configured to rotate in a first direction of rotation and connected to a first turbine shaft (36), and a second rotor (22b) configured to rotate in an opposite direction of rotation and connected to a second turbine shaft (38), the first rotor comprising turbine wheels interposed between turbine wheels of the second rotor, **characterised in that** one of the wheels of the second rotor is as defined in one of the preceding claims and is connected to the second turbine shaft by its disc.
